(19) Europäisches Patentamt / European Patent Office / Office européen des brevets

(11) **EP 1 221 728 B1**

(12) **FASCICULE DE BREVET EUROPEEN**

(45) Date de publication et mention de la délivrance du brevet:
**20.01.2016 Bulletin 2016/03**

(51) Int Cl.:
***H01M 2/12*** *(2006.01)*      ***F16K 17/04*** *(2006.01)*

(21) Numéro de dépôt: **01402994.6**

(22) Date de dépôt: **22.11.2001**

(54) **Soupape refermable et générateur électrochimique comprenant une telle soupape**

Wiederverschliessbares Ventil und dieses Ventil enthaltender elektrochemischer Generator

A resealable valve and electrochemical generator comprising said valve

(84) Etats contractants désignés:
**DE FR GB**

(30) Priorité: **04.01.2001 FR 0100077**

(43) Date de publication de la demande:
**10.07.2002 Bulletin 2002/28**

(73) Titulaire: **Arts Energy**
**16440 Nersac (FR)**

(72) Inventeurs:
• **Payen, Stéphane**
**16290 Nersac (FR)**
• **Raymond, Alain**
**16400 Voeuil et Giget (FR)**

(74) Mandataire: **Hirsch & Associés**
**137, rue de l'Université**
**75007 Paris (FR)**

(56) Documents cités:
**US-A- 3 484 301    US-A- 3 715 239**
**US-A- 3 994 749    US-A- 4 662 533**
**US-A- 4 993 602**

• **PATENT ABSTRACTS OF JAPAN vol. 017, no. 608 (E-1457), 9 novembre 1993 (1993-11-09) -& JP 05 190164 A (HITACHI MAXELL LTD), 30 juillet 1993 (1993-07-30)**

EP 1 221 728 B1

## Description

La présente invention concerne une soupape adaptée à un usage de soupape de sécurité pour générateur électrochimique par exemple du type à électrolyte aqueux. L'invention concerne aussi un générateur électrochimique équipé d'une telle soupape.

Les générateurs électrochimiques de type à électrolyte aqueux, par exemple ceux utilisant un couple électrochimique nickel-cadmium, comprennent généralement un boîtier fermé de façon étanche pour éviter des fuites d'électrolyte et la pénétration d'oxygène et d'agents polluants. Le couple électrochimique d'un tel générateur est susceptible de dégager des quantités importantes de gaz au cours de son fonctionnement ou encore le générateur électrochimique peut chauffer. Il en résulte une augmentation de pression des gaz et/ou de l'air emprisonné dans le boîtier du générateur électrochimique. C'est le cas, en particulier, si le générateur est soumis à des conditions de fonctionnement intenses, voir abusives, dans lesquelles il délivre des courants électriques excessifs. Cette augmentation de pression peut avoir pour conséquence la déformation du boîtier du générateur électrochimique et provoquer des défauts d'étanchéités, voire même l'explosion du boîtier. Pour éviter une telle situation, les générateurs électrochimiques sont généralement équipés de soupapes de sécurité qui assurent l'évacuation des gaz vers l'extérieur lorsque la pression à l'intérieur du boîtier dépasse un seuil donné.

Il existe un premier type de soupapes de sécurité comprenant une membrane en élastomère qui se rompt sous l'effet de la pression à l'intérieur du générateur électrochimique lorsqu'elle dépasse un certain seuil. Ce type de soupapes présente l'inconvénient d'être à usage unique : une fois rompue, la membrane n'assure plus l'étanchéité du générateur électrochimique malgré un éventuel retour à des conditions de fonctionnement normales.

Des soupapes de sécurité d'un deuxième type comprennent un clapet obturant un orifice du boîtier du générateur électrochimique. Le clapet s'ouvre pour libérer l'orifice et laisser s'échapper le gaz, de l'intérieur du boîtier si sa pression dépasse un niveau donné et puis il se referme lorsque la pression dans le boîtier revient en dessous de ce niveau donné. Leur mise en oeuvre comprend le maintien du clapet réalisé sous forme d'un joint, contre le pourtour de l'orifice du boîtier par le biais d'un élément élastique tel qu'un ressort. Cette solution a pour inconvénient de nécessiter une place importante pour loger à la fois le clapet et l'élément élastique. Elle présente aussi un prix de revient élevé en raison du nombre de composants et de leur assemblage sur le générateur électrochimique.

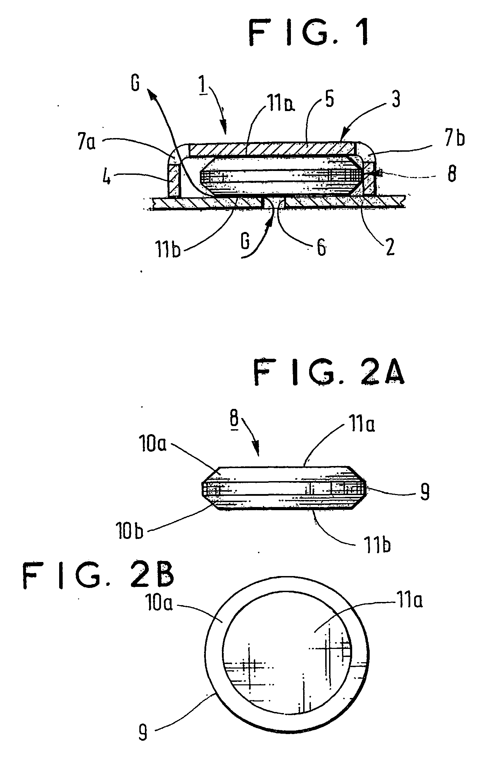

Une autre solution est illustrée par les figures 1, 2a et 2b. La soupape 1 est agencée sur l'extérieur d'un couvercle 2. Le couvercle 2 ferme de façon étanche la partie supérieure du boîtier du générateur électrochimique non représenté. La soupape 1 comprend une coupelle 3 agencée sur l'extérieur du couvercle 2. La zone du couvercle 2 sur laquelle est agencée la coupelle 3 est plate ; le dessin du couvercle 2 sur la figure 1 a été limitée à cette zone. La coupelle 3 a la forme d'un tronçon de tube cylindrique de révolution 4 délimité en longueur par deux plans perpendiculaires à son axe et dont une extrémité est fermée par un fond 5. L'autre extrémité du tronçon est fixée sur le couvercle 2. Le fond 5 est plat et parallèle à la zone plate du couvercle 2 sur laquelle est agencée la coupelle 3. Un orifice 6 agencé dans le couvercle 2, met en relation l'intérieur du boîtier du générateur électrochimique avec l'intérieur de la coupelle 3. L'orifice 6 est sensiblement coaxial avec le tronçon de tube cylindrique 4. Par ailleurs, deux trous d'évent 7a et 7b sont agencés dans le tronçon de tube cylindrique 4 à un niveau adjacent au fond 5. Les trous d'évent 7a et 7b sont diamétralement opposés. Un clapet 8 est agencé à l'intérieur de la coupelle 3, plus précisément, entre son fond 5 et le couvercle 2. Le clapet 8 est illustré par les figures 2a et 2b. Le clapet 8 a la forme extérieure suivante. Il comprend une partie 9 en forme de tronçon de cylindre de révolution délimité en longueur par deux plans perpendiculaires à son axe. Sur chacune des faces opposées en forme de disque de la partie 9 est agencée une partie tronconique respective 10a, 10b coaxiale à la partie 9. Le diamètre des parties tronconiques 10a, 10b évolue depuis le diamètre de la partie 9 vers un diamètre inférieur à celui-ci. Chacune des parties tronconiques 10a, 10b est délimitée par un plan perpendiculaire à l'axe commun à la partie 9 et aux parties tronconiques 10a, 10b. Il en résulte que le clapet 8 présente deux faces planes 11a, 11b - en forme de disque - parallèles l'une à l'autre. Le clapet 8 est réalisé en élastomère. Au repos, lorsqu'il n'est pas monté, la hauteur du clapet 8 - c'est-à-dire la distance entre les deux faces 11a et 11b - est plus importante que la distance séparant le fond 5 de la coupelle 3 du couvercle 2. Au contraire, le diamètre de la partie 9 du clapet 8 est inférieur au diamètre intérieur du tronçon de tube 4 de la coupelle 3. Le clapet 8 est placé à l'intérieur de la coupelle 3 avec la face 11a plaquée contre le fond 5 de la coupelle 3 et l'autre face 11b plaquée contre le couvercle 2. Il en résulte que le clapet 8 est comprimé entre ses deux faces 11a et 11b. Le fonctionnement de la soupape 1 est le suivant. En condition de fonctionnement normal du générateur électrochimique, la face 11b du clapet 8 est plaquée de façon élastique contre le couvercle 2 autour de l'orifice 6 du fait de la compression du clapet 8 entre le fond 5 de la coupelle 3 et le couvercle 2. En conséquence, le clapet 8 obture de façon étanche l'orifice 6 du couvercle 2. Lorsque la pression à l'intérieur du boîtier du générateur électrochimique dépasse un seuil donné, elle comprime davantage le clapet 8 contre le fond 5 au point de permettre aux gaz de se frayer un chemin entre la face 11b et le couvercle 2 et d'atteindre la zone libre définie entre la circonférence du clapet 8 et le tronçon de tube 4, d'où les gaz s'échappent librement à travers les trous d'évent 7a et 7b vers l'environnement extérieur au générateur électrochimique. Le chemin emprunté par les gaz est illustré par le trajet fléché référencé G sur la figure 1. Lorsque la pression à l'intérieur du boîtier revient à un niveau inférieur à ce seuil, le clapet 8 est à nouveau appliqué de façon étanche sur le couvercle 2 autour de l'orifice 6. En conséquence, l'orifice 6 est à nouveau obturé.

Cette solution présente plusieurs inconvénients. En premier lieu, le clapet 8 est fabriqué par injection/compression d'élastomère, ce qui implique un coût de fabrication important. Pour augmenter la productivité, il faut soit augmenter le nombre de moules de fabrication, soit augmenter le nombre d'empreintes par moules. Outre le coût de l'outillage, la mis en oeuvre de la deuxième proposition engendre des variations de la hauteur du clapet qui a pour conséquence de provoquer des dispersions de la pression d'ouverture de la soupape 1.

Par ailleurs, la précision du tarage de la pression d'ouverture de la soupape 1 dépend aussi du bon centrage du clapet 8 par rapport à l'orifice 6. Ce centrage est obtenu par le biais du tronçon de tube 4 de la coupelle 5. En effet, l'orifice 6 est centré par rapport au tronçon de tube 4 qui sert à centrer le clapet 8. Le centrage du clapet 8 dans le tronçon de tube 4 est réalisé par la partie 9 du clapet 8 qui présente un diamètre proche du diamètre intérieur du tronçon de tube 4. Néanmoins, pour que la soupape 1 puisse fonctionner, le diamètre de la partie 9 du clapet 8 doit rester inférieur au diamètre intérieur du tronçon de tube 4 en toute situation, en particulier lorsque le diamètre du clapet 8 augmente en raison de la compression du clapet 8 entre ses deux faces 11 a, 11 b due à son montage, mais aussi à l'action des gaz à travers l'orifice 6. Dans le cas contraire, la circonférence de la partie 9 viendrait appuyer contre la surface intérieure du tronçon de tube 4. Il résulterait alors une étanchéité entre ces deux pièces, d'où l'évacuation des gaz vers les trous d'évent 7a, 7b, en cas de surpression dans le boîtier du générateur électrochimique, serait limitée, voire rendue impossible. Par voie de conséquence, la soupape ne remplirait plus correctement son rôle. Cette solution a donc un inconvénient supplémentaire du fait que la détermination du diamètre du clapet 8 repose sur deux considérations contradictoires : d'un côté, le diamètre du clapet 8 doit être aussi proche que possible du diamètre intérieur de la coupelle 5 pour assurer son centrage par rapport à l'orifice 6 et d'un autre côté, le diamètre du clapet 8 doit être suffisamment inférieur au diamètre intérieur de la coupelle 5 pour permettre un dégazage suffisant en cas de surpression dans le boîtier du générateur électrochimique.

Le document US-3,994,749 propose un clapet de forme polygonale obtenu par découpe dans une feuille d'un matériau élastomère. Cependant ce clapet présente l'inconvénient de poser un problème de fiabilité dans la distribution automatisée lors de l'opération d'assemblage de la soupape. Il risque de se coincer dans les rails et les bols vibrants, contrairement à un clapet de forme circulaire qui circule aisément.

La présente invention a pour but de proposer un clapet qui ne présente pas les inconvénients des clapets décrits dans l'art antérieur, et qui permette une distribution automatisée plus fiable, notamment en utilisant l'équipement industriel existant.

A cette fin, la présente invention propose une soupape comprenant un clapet élastique comprimé par une première paroi contre un orifice d'une deuxième paroi et entouré par une troisième paroi dans laquelle le clapet a une section, suivant un plan parallèle à la première paroi ou à la deuxième paroi, présentant trois sommets disposés en triangle, les trois sommets de ladite section du clapet étant reliés deux à deux par un arc de cercle respectif.

Chacun des arcs de cercle est de préférence situé à l'extérieur du triangle imaginaire défini par les trois sommets. De plus, le rayon de courbure de chacun des arcs de cercle peut être avantageusement inférieur ou égal à deux fois la longueur d'un côté du triangle imaginaire formé par les trois sommets. Par ailleurs, le rayon de courbure de chacun des arcs de cercle est de préférence supérieur ou égal à : $R \geq L \times (3 + \sqrt{3}) / 6$ avec R le rayon de courbure de l'arc de cercle et L la longueur d'un côté du triangle imaginaire formé par les trois sommets. De façon particulièrement avantageuse, le rayon de courbure de chacun des arcs de cercle est égal à la longueur d'un côté du triangle imaginaire formé par les trois sommets.

La troisième paroi a de préférence une section circulaire. Le diamètre circonscrit aux trois sommets de ladite section du clapet, mesuré libre de toutes contraintes extérieures, est de préférence supérieur ou égal à 0,8 fois le diamètre intérieur de la troisième paroi. Plus avantageusement, le diamètre circonscrit aux trois sommets de ladite section du clapet, mesuré libre de toutes contraintes extérieures, peut être supérieur ou égal à 0,9 fois le diamètre intérieur de la troisième paroi. De façon particulièrement préférée, le diamètre circonscrit aux trois sommets de la section du clapet, mesuré libre de toutes contraintes extérieures, est égal au diamètre intérieur de la troisième paroi.

La première paroi est de préférence parallèle à la deuxième paroi. Les deux faces du clapet venant en contact avec respectivement la première paroi et la deuxième paroi, sont de préférence parallèles. Les flancs du clapet définissant ladite section sont de préférence tous perpendiculaires à un même plan. De façon avantageuse, les flancs du clapet définissant ladite section, peuvent être tous perpendiculaires aux deux faces du clapet en contact avec respectivement la première paroi et la deuxième paroi.

Les sommets de ladite section du clapet sont de préférence disposés suivant un triangle équilatéral.

L'orifice de la deuxième paroi est de préférence centré sur l'axe de la troisième paroi. Par ailleurs, au moins une ouverture d'évent peut être agencée dans la troisième paroi ou dans la première paroi. De préférence, la soupape comprend deux ouvertures d'évent agencées dans la troisième paroi ou dans la première paroi et qui sont diamétralement opposées par rapport à l'axe de la troisième paroi.

Dans un mode de réalisation préféré, la distance entre la première paroi et la deuxième paroi est supérieure ou égale à une fois, de préférence deux fois, avantageusement trois fois le diamètre circonscrit aux trois sommets de ladite section du clapet, mesuré libre de toutes contraintes extérieures.

Par ailleurs, le clapet peut comprendre plusieurs couches de matériaux superposées.

Selon un autre aspect, l'invention propose aussi un générateur électrochimique comprenant une soupape selon l'invention. La deuxième paroi peut faire partie d'un couvercle fermant le générateur électrochimique. Par ailleurs, la deuxième paroi ou la troisième paroi peut constituer une borne de sortie de courant.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente schématiquement une soupape de sécurité d'un générateur électrochimique selon l'art antérieur.

Les figures 2a et 2b représentent schématiquement le clapet de la soupape de la figure 1 en vue de face et en vue de dessus respectivement.

La figure 3 représente schématiquement, en demi-vue et demi-coupe, un générateur électrochimique équipé d'une soupape de sécurité selon l'invention.

Les figures 4a et 4b représentent schématiquement le clapet selon l'invention, en vue de face et en vue de dessus respectivement.

La figure 5 représente schématiquement une section transversale à travers la soupape équipée du clapet des figures 4a et 4b.

Les figures 6a et 6b représentent schématiquement une variante du clapet des figures 4a et 4b, en vue de face et en vue de dessus respectivement.

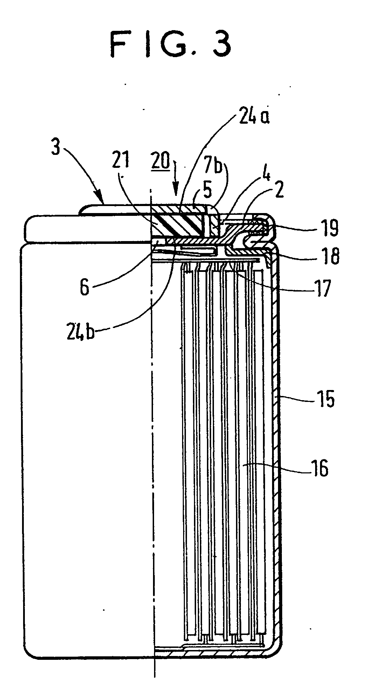

La figure 3 illustre un générateur électrochimique équipé d'une soupape de sécurité 20 selon un mode de réalisation de l'invention. Le générateur électrochimique est d'un type classique. Il s'agit par exemple d'un générateur électrochimique du type nickel-cadmium répondant au format C ou Cs. Il comprend un boîtier étanche 15 en forme de cuve cylindrique de révolution qui contient l'électrolyte et les électrodes 16 réalisées généralement sous forme spiralée, c'est-à-dire sous forme de rubans enroulés autour d'un mandrin. Le boîtier 1 est fermé de façon étanche par un couvercle du type de l'art antérieur décrit en relation avec la figure 1. Pour cette raison, le couvercle est ici également désigné par le numéro de référence 2 comme pour celui de la figure 1. La forme générale du couvercle 2 est celle d'un disque. Il est fixé sur la partie supérieure du boîtier 15 par pliage du bord supérieur du boîtier 15 autour de la périphérie du couvercle 2 comme représenté sur la figure 3 ou par tout autre moyen adéquat. L'étanchéité entre le boîtier 15 et le couvercle 2 est assuré par exemple par un joint 19 interposé entre les deux pièces. Une pièce 18 rapportée à l'intérieur du boîtier 15 présentant la forme générale d'une couronne, peut servir avantageusement d'appui au couvercle 2, notamment lors de l'opération de pliage du bord supérieur du boîtier 15 autour du couvercle 2. La soupape de sécurité 20 est similaire à la soupape 1 de l'art antérieur décrite en relation avec la figure 1 dans la mesure où elle comprend une coupelle de même type, agencée de manière identique sur le couvercle 2. Pour cette raison, la coupelle ainsi que ses différentes parties sont identifiées ici par les mêmes numéros de référence que dans la figure 1. L'on comprendra que les caractéristiques du couvercle 2 et de la coupelle 3 - notamment leurs formes et leur agencement l'un par rapport à l'autre - qui ont été énoncées en relation avec la figure 1 lors de la description de l'art antérieur sont également applicables dans ce mode de réalisation de l'invention. En revanche, la soupape 20 comprend un clapet 21 qui remplace le clapet 8 de l'art antérieur détaillé sur la figure 2. Le clapet 21 sera décrit plus en détail dans la suite. Le couvercle 2 peut présenter avantageusement une forme de cuvette autour de la zone plate recevant la coupelle 3 afin de positionner celle-ci lors de son montage sur le couvercle 2 pour la centrer par rapport à son orifice 6.

La coupelle 3 peut servir de borne de sortie de courant. Pour cela, les électrodes 16 sont raccordées électriquement à une lame 17 par exemple à l'aide de minces bandes métalliques ou tout autre moyen adéquat. La lame 17 appuie élastiquement contre la surface intérieure du couvercle 2 pour établir un contact électrique avec celui-ci. Le couvercle 2 est à son tour en contact électrique avec la coupelle 3. Bien évidemment, l'homme du métier choisira des matériaux compatibles d'un point de vue électrochimique pour les minces bandes métalliques, la lame 17, le couvercle 2 et la coupelle 3. Ainsi, dans le cas d'une électrode positive, ces pièces pourront être réalisées en acier nickelé ou en nickel. S'il s'agit d'une électrode négative, elles pourront être en nickel ou en acier nickelé. Dans le cas où le boîtier 15 constituerait la deuxième borne de sortie, le joint 19 assurera également l'isolation électrique nécessaire entre la coupelle 3 et le couvercle 2 d'une part et le boîtier 15 d'autre part.

La coupelle 3 pourra être réalisée par emboutissage. Les trous d'évents 7a et 7b sont de préférence réalisés simultanément avec l'emboutissage. La forme de cuvette du couvercle 2 peut également être obtenue par emboutissage à partir d'un disque plat. La coupelle 3 peut être fixée sur le couvercle 2 par soudage par points ou avec un cordon de soudure. L'homme du métier comprendra qu'il n'est pas nécessaire d'assurer une étanchéité entre le pourtour de l'extrémité inférieure de la coupelle 3 et le couvercle 2.

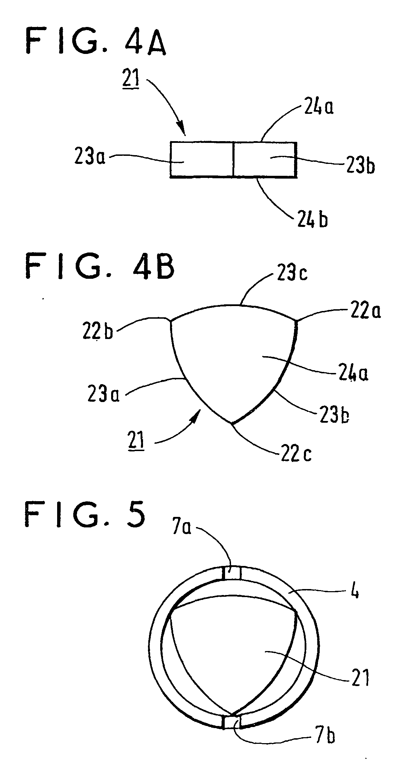

En relation avec les figures 4a et 4b, nous allons maintenant décrire le clapet 21. Le clapet 21 a la forme d'un tronçon de barreau plein dont la longueur est délimitée par deux plans qui sont de préférence parallèles l'un à l'autre. La section du clapet 21 présente trois sommets - référencés ici 22a, 22b, 22c - disposés en triangle, liés entre eux par un arc de cercle respectif qui correspond donc chacun à un flanc respectif - référencés ici 23a, 23b, 23c - du clapet 21. La courbure des arcs est orientée vers l'extérieur ; autrement dit, les flancs 23a, 23b, 23c apparaissent bombés. Les trois sommets 22a, 22b, 22c sont disposés de préférence suivant un triangle équilatéral. Le rayon de courbure des arcs de cercle reliant deux à deux les trois sommets 22a, 22b, 22c en configuration équilatérale qui est préférée - c'est-à-dire le rayon de courbure des flancs 23a, 23b, 23b - est supérieur à la longueur d'un côté du triangle imaginaire formé par ces trois sommets, divisée par la racine de trois. Le clapet 21 présente donc deux faces planes 24a, 24b parallèles l'une à l'autre. Les trois flancs 23a, 23b, 23c du clapet 21 sont de préférence perpendiculaires tous les trois à un même plan. En fait, les trois flancs 23a, 23b, 23c pourront être avantageusement perpendiculaires aux deux faces 24a, 24b.

Le clapet 21 est réalisé en une matière élastique telle qu'un élastomère. Au repos - lorsqu'il n'est pas monté et libre de contraintes extérieures -, la hauteur du clapet 21 c'est-à-dire la distance entre les deux faces 24a et 24b - est plus importante que la distance séparant le fond 5 de la coupelle 3 du couvercle 2. Au repos, le diamètre circonscrit à la section du clapet 21 est de préférence égal au diamètre intérieur du tronçon de tube 4 de la coupelle 3.

Le clapet 21 est placé à l'intérieur de la coupelle 3 avec la face 24a plaquée contre le fond 5 de la coupelle 3 et l'autre face 24b plaquée contre le couvercle 2. Il en résulte que le clapet 21 est comprimé entre ses deux faces 24a et 24b. En condition de fonctionnement normal du générateur électrochimique, la face 24b du clapet 21 est plaquée de façon élastique contre le couvercle 2 autour de l'orifice 6 du fait de la compression du clapet 21 entre le fond 5 de la coupelle 3 et le couvercle 2. En conséquence, le clapet 21 obture de façon étanche l'orifice 6 du couvercle 2. Lorsque la pression à l'intérieur du boîtier du générateur électrochimique dépasse un seuil donné, elle comprime davantage le clapet 21 contre le fond 5 au point de permettre aux gaz de se frayer un chemin entre la face 24b et le couvercle 2 et d'atteindre la zone libre définie entre les flancs 23a, 23b, 23c du clapet 21 et le tronçon de tube 4, d'où les gaz s'échappent librement à travers les trous d'évent 7a et 7b vers l'environnement extérieur au générateur électrochimique. Lorsque la pression à l'intérieur du boîtier revient à un niveau inférieur à ce seuil, le clapet 21 est à nouveau appliqué de façon étanche sur le couvercle 2 autour de l'orifice 6. En conséquence, l'orifice 6 est à nouveau obturé. En variante non représentée, les sommets de la section du clapet 21 peuvent être arrondis au lieu d'être pointus. Dans ce cas, c'est le diamètre circonscrit à la section du clapet 21 pris au niveau des sommets arrondis qui est de préférence égal au diamètre intérieur du tronçon de tube 4 de la coupelle 3.

En variante, le diamètre circonscrit à la section du clapet 21 peut également être légèrement inférieur au diamètre intérieur de la coupelle 3. Il peut ainsi être choisi de sorte que, une fois comprimé entre le fond 5 de la coupelle 3 et le couvercle 2, le diamètre circonscrit de la section du clapet 21 corresponde au diamètre intérieur de la coupelle 3. De manière générale, on choisira de préférence le diamètre circonscrit à la section du clapet 21 - pris non monté, libre de toutes contraintes extérieures - supérieur ou égal à 0,8 et avantageusement 0,9 fois le diamètre intérieur du tronçon de tube 4 de la coupelle 3.

L'homme du métier comprendra que la pression de tarage à laquelle s'ouvre le clapet 21, dépend notamment de l'élasticité de l'élastomère employé et du taux de compression du clapet 21 dans la coupelle, c'est-à-dire du ratio entre la hauteur du clapet 21 mesurée au repos et la distance entre le fond 5 de la coupelle 3 et le couvercle 2. La pression de tarage dépendra aussi du diamètre de l'orifice 6 et des dimensions de la section du clapet 21. Le choix du matériau du clapet 21 se fait en considération de son élasticité qui permet le maintien étanche du clapet sur l'orifice 6 jusqu'à la pression de gaz voulue ainsi que de son aptitude à fournir une étanchéité autour de l'orifice 6 tout en étant résistant aux agents chimiques contenus dans le générateur électrochimique. Il pourra avantageusement être utilisé un élastomère tel que de l'EPDM (Ethylène Propylène-Diène monomère).

La forme du clapet 21 est avantageuse à plusieurs égards. Elle permet un centrage précis du clapet 21 à l'intérieur de la coupelle 3. Par voie de conséquence, le clapet 21 est également centré précisément par rapport à l'orifice 6 du couvercle 2. Le centrage du clapet 21 par rapport à l'orifice 6 est donc amélioré par rapport au clapet 8 de l'art antérieur présenté avec les figures 1, 2a et 2b. Par voie de conséquence, il y a nettement moins de dispersion de la pression de tarage à laquelle s'ouvre le clapet 21, en raison d'un éventuel décentrement de celui-ci par rapport à l'orifice 6, au contraire de l'art antérieur.

Par ailleurs, étant donné la forme de sa section, il n'y a pas de risque que le clapet 21 obture simultanément les deux trous d'évents 7a, 7b. En effet, si un sommet de la section du clapet 21 est positionné au niveau d'un des deux trous d'évent 7a, 7b en l'obturant, l'autre trou d'évent fait nécessairement face au côté opposé de la section du clapet 21, lequel côté est nécessairement distant de ce trou d'évent. Autrement dit, il existe toujours un passage suffisant pour les gaz vers l'un des deux trous d'évent 7a, 7b entre le tronçon de tube 4 de la coupelle 3 et les flancs du clapet 21. Pour cette raison, les flancs 23a, 23b, 23c peuvent être avantageusement droits au contraire du clapet 8 de l'art antérieur présenté sur les figures 1, 2a et 2b. En effet, dans ce dernier cas, si le clapet 8 est modifié de sorte à avoir les flancs droits sur toute sa hauteur avec un diamètre correspondant à celui de sa partie 9, il risque d'obturer les deux trous d'évents 7a, 7b lors du fonctionnement de la soupape.

Dans la mesure où ses flancs sont perpendiculaires à un même plan, le clapet 21 peut être fabriqué par poinçonnage dans une plaque d'élastomère - éventuellement rectifiée - dont l'épaisseur correspond à la hauteur du clapet 21. Cette méthode de fabrication n'est évidemment pas applicable au clapet 8 de l'art antérieur en raison de ses parties tronconiques 10a, 10b. Cette méthode de fabrication a l'avantage de fournir des clapets 21 ayant tous une hauteur constante et précise, au contraire du procédé d'injection / compression avec un moule multi-empreintes. En raison de la hauteur plus précise du clapet 21, la dispersion de la pression de tarage à laquelle s'ouvre le clapet 21 est moindre d'un clapet à l'autre en comparaison du clapet 8 de l'art antérieur. De plus, la productivité est meilleure et le prix de revient est plus faible en comparaison. En variante, le clapet 21 peut être obtenu par tronçonnage d'un barreau en élastomère ayant une section de la forme de la section du clapet 21 qui aura été obtenu par extrusion. Cette méthode ne peut pas non plus être utilisée pour fabriquer le clapet 8 de l'art antérieur.

Les flancs 23a, 23b, 23c bombés chacun en arc de cercle ont pour avantage de permettre une distribution automatisée plus fiable des clapets lors de l'assemblage de la soupape. En effet, le clapet 21 présentant cette section ne risque pas de se coincer dans les rails et/ou les bols vibrants de distribution équipant les machines d'assemblage automatisées des soupapes. De ce point de vue, dans la configuration équilatérale qui est préférée, il est préférable que le rayon de courbure des flancs 23a, 23b, 23c soit inférieur ou égal à deux fois la longueur d'un côté du triangle imaginaire formé par ces trois sommets 22a, 22b, 22c. Il est encore plus avantageux que le rayon de courbure des flancs 23a, 23b, 23c soit égal à la longueur d'un côté du triangle imaginaire formé par ces trois sommets 22a, 22b, 22c : dans ce cas, la section du clapet 21 est en forme de triangle de REULEAU. Cette configuration est celle représentée par les figures 4a et 4b. Autrement dit, la section du clapet sera d'autant plus avantageuse qu'elle se rapproche de la forme du triangle de REULEAU. En effet, la propriété du triangle de REULEAU est d'avoir un diamètre apparent constant. Par diamètre apparent, il faut comprendre la distance d'un sommet quelconque du triangle de REULEAU, respectivement 22a, 22b, 22c, à un point quelconque du flanc qui lui est opposé, respectivement 23a, 23b, 23c. Par conséquent, le clapet à section en forme de triangle de REULEAU se comporte avantageusement comme un disque dans les rails et bols vibrants de distribution des machines automatisées d'assemblage. En particulier, si le diamètre apparent du triangle de REULEAU est choisi égal au diamètre de la partie 9 du clapet 8 de l'art antérieur, les mêmes rails et bols de distribution pourront être utilisés pour distribuer les clapets 21 selon l'invention. Dans cette configuration, le clapet 21 sera mieux centré dans la coupelle 3 en comparaison du clapet 8 de l'art antérieur puisque le diamètre circonscrit au triangle de REULEAU est plus important que son diamètre apparent. Par ailleurs, l'espace entre les flancs 23a, 23b, 23c et le tronçon de tube 4 de la coupelle 3 reste suffisamment important pour permettre un dégazage efficace par les trous d'évent 7a et 7b. Cette situation est illustrée par la figure 5 qui représente une section transversale à travers le tronçon de tube 4 de la coupelle 3 avec le clapet 21 en forme de triangle de REULEAU monté dans celle-ci.

De manière générale, pour assurer un passage suffisant des gaz entre les flancs du clapet et le tronçon de tube, il est préférable que le rayon de courbure des flancs soit supérieur ou égal à :

$$R \geq L \times (3 + \sqrt{3})/6$$

avec : R : rayon de courbures des flancs 23a, 23b, 23c ;
L : longueur d'un côté du triangle imaginaire formé par les trois sommets 22a, 22b, 22c.

A titre d'exemple de dimensionnement, la coupelle 3 réalisée en acier embouti d'une épaisseur de 1 mm, présente un diamètre intérieur de 10 mm et la distance du fond 5 au couvercle 2 est de 2 mm. Les trous d'évent 7a et 7b ont chacun un diamètre de 1 mm. Le couvercle 2 réalisé en acier de 0,8 mm d'épaisseur a un orifice 6 de diamètre 2 mm. Le clapet 21, en EPDM, avec une section en forme de triangle de REULEAU, présente un diamètre circonscrit de 9 mm et une épaisseur de 2,5 mm mesurés au repos, libre de contraintes extérieures. La soupape résultante s'ouvre pour une pression de l'ordre de 20 bars.

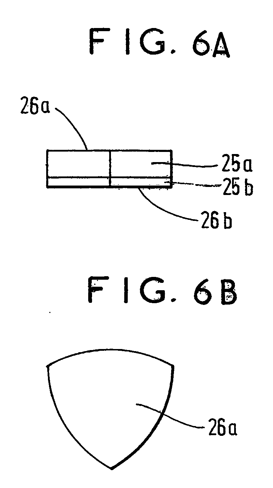

Dans un autre mode de réalisation, le clapet 21 est composé de deux ou plusieurs couches de matériaux différents. Le clapet des figures 4a et 4b a été représenté sur les figures 6a et 6b suivant une réalisation à deux couches de matériaux différents. La couche inférieure 25a du côté de la face 26a est réalisé dans un premier matériau alors que le couche 25b du côté de la face 26b est réalisé dans un deuxième matériau. Étant donné que c'est la face 26b qui obture l'orifice 6 du couvercle 2, le premier matériau peut être défini pour résister aux agents chimiques contenus dans le générateur électrochimique et fournir une bonne étanchéité, ceci indépendamment de son élasticité. Au contraire, le deuxième matériau est choisi en considération de son élasticité en vue de définir la pression d'ouverture du clapet, sans devoir tenir compte de son aptitude à fournir une étanchéité. On pourra ainsi choisir pour le premier matériau de l'EPDM et pour le deuxième matériau du polyéthylène ou du polyamide ou encore de l'EPDM ayant une dureté différente de celui de la couche inférieure 25a. Le clapet 21 peut également être fabriqué par poinçonnage dans une plaque dont l'épaisseur correspond à la hauteur du clapet 21, la plaque étant obtenue par collage de deux plaques ayant chacune l'épaisseur correspondante à la couche 25a ou 25b et réalisées dans le matériau correspondant. Dans une variante, le clapet 21 peut comprendre une couche inférieure, une couche intermédiaire et une couche supérieure. Dans ce cas, les couches inférieure et supérieure sont réalisées avec le premier matériau précité alors que la couche intermédiaire est réalisée avec le deuxième matériau précité, ces matériaux remplissant les mêmes fonctions que dans la version de clapet à deux couches. Cette version à trois couches a l'avantage de permettre le montage du clapet 21 dans la soupape indépendamment de son orientation dessus-dessous puisque chacune des couches inférieure et supérieure est adaptée pour obturer l'orifice 6.

Un avantage de la présente invention est également de permettre la réalisation de clapets 21 ayant une hauteur importante par rapport à son diamètre circonscrit. En effet, les sommets de sa section assurent un maintien en position efficace du clapet 21 à l'intérieur du tronçon de tube 4 de la coupelle 3 sur toute sa hauteur. Il est ainsi évité le risque de flambage du clapet suivant sa hauteur à l'intérieur de la coupelle 3, au contraire du clapet 8 de l'art antérieur. Or, le flambage a pour inconvénient de modifier la pression de tarage à laquelle le clapet s'ouvre. Le clapet 21 comprimé entre le fond 5 de la coupelle 3 et le couvercle 2 peut ainsi avoir une hauteur supérieure ou égale à une fois, deux fois ou trois fois son diamètre circonscrit mesuré au repos. De ce fait, il est permis de définir des pressions d'ouverture du clapet dans des gammes de pressions et des applications dans lesquelles les clapets 8 de l'art antérieur ne sont pas applicables.

Bien entendu, la présente invention n'est pas limitée au mode de réalisation décrit et représenté, mais elle est susceptible de nombreuses variantes accessibles à l'homme de l'art. Ainsi, la section du clapet peut également être adaptée de sorte que les sommets soient reliés chacun par un arc de cercle rentrant vers le centre de la section. Bien évidemment, la soupape selon l'invention peut être agencée directement sur le boîtier du générateur électrochimique au lieu d'être agencée sur son couvercle. Les trous d'évent dans la coupelle peuvent ne pas être diamétralement opposés par rapport à la coupelle, mais avoir un écart angulaire quelconque qui ne correspond pas à l'écart angulaire entre les différents sommets de la section du clapet. La coupelle de la soupape peut comprendre plus de deux trous d'évent. Les trous d'évent peuvent être agencés à un niveau différent sur le tronçon de tube 4 au lieu d'être adjacent au fond 5. En variante, les trous d'évent peuvent être formés de rainures s'étendant sur tout ou partie de la hauteur du tronçon de tube 4 depuis le couvercle 2 au fond 5, voire même s'étendant également sur le fond 5. Bien entendu, la coupelle 3 peut également présenter une section ellipsoïdale au lieu d'être strictement circulaire. Dans ce cas, la section du clapet pourra éventuellement être adaptée, par exemple de telle manière que les sommets soient disposés en triangle isocèle de sorte à ce que chacun des sommets touche la paroi intérieure du tronçon de tube 4 ou que ces sommets soient équidistants à cette paroi : il en résulte que le clapet est orienté à l'intérieur de la coupelle. Par ailleurs, la soupape selon l'invention peut être appliquée plus généralement à des boîtiers sous pression quelconques autres que ceux de générateurs électrochimiques.

## Revendications

1. Soupape comprenant un clapet élastique (21) comprimé par une première paroi (5) contre un orifice (6) d'une deuxième paroi (2) et entouré par une troisième paroi (4), **caractérisée en ce que** le clapet a une section, suivant un plan parallèle à la première paroi (5) ou à la deuxième paroi (2), présentant trois sommets (22a, 22b, 22c) disposés en triangle, les trois sommets (22a, 22b, 22c) de ladite section du clapet étant reliés deux à deux par un arc de cercle respectif, chacun des arcs de cercle étant situé à l'extérieur du triangle imaginaire défini par les trois sommets.

2. Soupape selon la revendication 1, dans laquelle le rayon de courbure de chacun des arcs de cercle est inférieur ou égal à deux fois la longueur d'un côté du triangle imaginaire formé par les trois sommets.

3. Soupape selon l'une des revendications 1 et 2, dans laquelle le rayon de courbure de chacun des arcs de cercle est supérieur ou égal à : $R \geq L \times (3 + \sqrt{3}) / 6$ avec R le rayon de courbure de l'arc de cercle et L la longueur d'un côté du triangle imaginaire formé par les trois sommets.

4. Soupape selon l'une des revendications 1 à 3, dans laquelle le rayon de courbure de chacun des arcs de cercle est égal à la longueur d'un côté du triangle imaginaire formé par les trois sommets.

5. Soupape selon l'une des revendications précédentes, dans laquelle la troisième paroi (4) a une section circulaire.

6. Soupape selon la revendication 5, **caractérisée en ce que** le diamètre circonscrit aux trois sommets de ladite section du clapet, mesuré libre de toutes contraintes extérieures, est supérieur ou égal à 0,8 fois le diamètre intérieur de la troisième paroi.

7. Soupape selon la revendication 6, dans laquelle le diamètre circonscrit aux trois sommets de ladite section du clapet, mesuré libre de toutes contraintes extérieures, est supérieur ou égal à 0,9 fois le diamètre intérieur de la troisième paroi.

8. Soupape selon la revendication 7, dans laquelle le diamètre circonscrit aux trois sommets de la section triangulaire du clapet, mesuré libre de toutes contraintes extérieures, est égal au diamètre intérieur de la troisième paroi.

9. Soupape selon l'une des revendications précédentes, dans laquelle la première paroi est parallèle à la deuxième paroi.

10. Soupape selon l'une des revendications précédentes, dans laquelle les deux faces du clapet venant en contact avec respectivement la première paroi et la deuxième paroi, sont parallèles.

11. Soupape selon l'une des revendications précédentes, dans laquelle les flancs du clapet définissant ladite section sont tous perpendiculaires à un même plan.

12. Soupape selon l'une des revendications 9 à 11, **caractérisée en ce que** les flancs du clapet définissant ladite section, sont tous perpendiculaires aux deux faces du clapet en contact avec respectivement la première paroi et la deuxième paroi.

13. Soupape selon l'une des revendications précédentes, dans laquelle les sommets de ladite section du clapet sont disposés suivant un triangle équilatéral.

14. Soupape selon l'une des revendications précédentes, dans laquelle l'orifice de la deuxième paroi est centré sur l'axe de la troisième paroi.

15. Soupape selon l'une des revendications précédentes, dans laquelle au moins une ouverture d'évent (7a, 7b) est agencée dans la troisième paroi ou dans la première paroi.

16. Soupape selon la revendication 15, comprenant deux ouvertures d'évent agencées dans la troisième paroi ou dans la première paroi et qui sont diamétralement opposées par rapport à l'axe de la troisième paroi.

17. Soupape selon l'une des revendications précédentes, dans laquelle la distance entre la première paroi et la deuxième paroi est supérieure ou égale à une fois le diamètre circonscrit aux trois sommets de ladite section du clapet, mesuré libre de toutes contraintes extérieures.

18. Soupape selon la revendication 17, dans laquelle la distance entre la première paroi et la deuxième paroi est supérieure ou égale à deux fois le diamètre circonscrit aux trois sommets de ladite section du clapet, mesuré libre de toutes contraintes extérieures.

19. Soupape selon la revendication 18, dans laquelle la distance entre la première paroi et la deuxième paroi est supérieure ou égale à trois fois le diamètre circonscrit aux trois sommets de ladite section du clapet, mesuré libre de toutes contraintes extérieures.

20. Soupape selon l'une des revendications précédentes, dans laquelle le clapet comprend plusieurs couches de matériaux superposées.

21. Générateur électrochimique comprenant une soupape selon l'une des revendications précédentes.

22. Générateur électrochimique selon la revendication 21, **caractérisé en ce que** la deuxième paroi fait partie d'un couvercle fermant le générateur électrochimique.

23. Générateur électrochimique selon l'une des revendications 21 et 22, **caractérisé en ce que** la deuxième paroi ou la troisième paroi constitue une borne de sortie de courant.

**Patentansprüche**

1. Ventil, das einen elastischen Schließkörper (21) umfasst, der von einer ersten Wand (5) gegen eine Öffnung (6) einer zweiten Wand (2) gedrückt wird und der von einer dritten Wand (4) umgeben ist, **dadurch gekennzeichnet, dass** der Schließkörper gemäß einer Ebene, die parallel zur ersten Wand (5) oder zur zweiten Wand (2) ist, einen Querschnitt hat, welcher drei Eckpunkte (22a, 22b, 22c) aufweist, die als Dreieck angeordnet sind, wobei die drei Eckpunkte (22a, 22b, 22c) des Querschnitts des Schließkörpers paarweise durch jeweils einen Kreisbogen verbunden sind, wobei sämtliche Kreisbögen sich außerhalb des imaginären Dreiecks befinden, welches von den drei Eckpunkten aufgespannt wird.

2. Ventil nach Anspruch 1, wobei der Krümmungsradius bei sämtlichen Kreisbögen höchstens dem Doppelten der Länge einer Seite des imaginären Dreiecks entspricht, welches von den drei Eckpunkten gebildet wird.

3. Ventil nach einem der Ansprüche 1 und 2, wobei der Krümmungsradius sämtlicher Kreisbögen mindestens folgendem Wert entspricht: $R \geq L \times (3 + \sqrt{3}) / 6$, wobei R der Krümmungsradius des Kreisbogen ist und L die Länge einer Seite des imaginären Dreiecks ist, welches von den drei Eckpunkten gebildet wird.

4. Ventil nach einem der Ansprüche 1 bis 3, wobei der Krümmungsradius bei sämtlichen Kreisbögen gleich der Länge einer Seite des imaginären Dreiecks ist, welches von den drei Eckpunkten gebildet wird.

**5.** Ventil nach einem der vorhergehenden Ansprüche, wobei die dritte Wand (4) einen kreisförmigen Querschnitt hat.

**6.** Ventil nach Anspruch 5, **dadurch gekennzeichnet, dass** der Durchmesser, welcher von den drei Eckpunkten des Querschnitts des Schließkörpers begrenzt wird, mindestens dem 0,8-fachen des Innendurchmessers der dritten Wand entspricht, wenn er frei von äußeren Zwängen gemessen wird.

**7.** Ventil nach Anspruch 6, wobei der Durchmesser, welcher von den drei Eckpunkten des Querschnitts des Schließkörpers begrenzt wird, mindestens dem 0,9-fachen des Innendurchmessers der dritten Wand entspricht, wenn er frei von äußeren Zwängen gemessen wird.

**8.** Ventil nach Anspruch 7, wobei der Durchmesser, welcher von den drei Eckpunkten des dreieckigen Querschnitts des Schließkörpers begrenzt wird, gleich dem Innendurchmesser der dritten Wand ist, wenn er frei von äußeren Zwängen gemessen wird.

**9.** Ventil nach einem der vorhergehenden Ansprüche, wobei die erste Wand parallel zur zweiten Wand ist.

**10.** Ventil nach einem der vorhergehenden Ansprüche, wobei die beiden Flächen des Schließkörpers, die mit der ersten Wand beziehungsweise der zweiten Wand in Kontakt treten, parallel sind.

**11.** Ventil nach einem der vorhergehenden Ansprüche, wobei sämtliche Seitenwände des Schließkörpers, welche den Querschnitt begrenzen, zu ein und derselben Ebene senkrecht sind.

**12.** Ventil nach einem der Ansprüche 9 bis 11, **dadurch gekennzeichnet, dass** sämtliche Seitenwände des Schließkörpers, welche den Querschnitt begrenzen, senkrecht zu den beiden Flächen des Schließkörpers sind, welche mit der ersten Wand beziehungsweise mit der zweiten Wand in Kontakt sind.

**13.** Ventil nach einem der vorhergehenden Ansprüche, wobei die Eckpunkte des Querschnitts des Schließkörpers gemäß einem gleichseitigen Dreieck angeordnet sind.

**14.** Ventil nach einem der vorhergehenden Ansprüche, wobei die Öffnung der zweiten Wand mittig auf die Achse der dritten Wand ausgerichtet ist.

**15.** Ventil nach einem der vorhergehenden Ansprüche, wobei mindestens eine Ablassöffnung (7a, 7b) in der dritten Wand oder in der ersten Wand angeordnet ist.

**16.** Ventil nach Anspruch 15, welches zwei Ablassöffnungen umfasst, die in der dritten Wand oder in der ersten Wand angeordnet sind, wobei sie sich unter Bezugnahme auf die Achse der dritten Wand diametral gegenüberliegen.

**17.** Ventil nach einem der vorhergehenden Ansprüche, wobei die Entfernung zwischen der ersten Wand und der zweiten Wand mindestens dem einfachen Wert des Durchmessers entspricht, welcher von den drei Eckpunkten des Querschnitts des Schließkörpers begrenzt wird, wobei er frei von äußeren Zwängen gemessen wird.

**18.** Ventil nach Anspruch 17, wobei die Entfernung zwischen der ersten Wand und der zweiten Wand mindestens dem doppelten Wert des Durchmessers entspricht, welcher von den drei Eckpunkten des Querschnitts des Schließkörpers begrenzt wird, wobei er frei von äußeren Zwängen gemessen wird.

**19.** Ventil nach Anspruch 18, wobei die Entfernung zwischen der ersten Wand und der zweiten Wand mindestens dem dreifachen Wert des Durchmessers entspricht, welcher von den drei Eckpunkten des Querschnitts des Schließkörpers begrenzt wird, wobei er frei von äußeren Zwängen gemessen wird.

**20.** Ventil nach einem der vorhergehenden Ansprüche, wobei der Schließkörper mehrere Schichten aus übereinander angeordneten Materialien umfasst.

**21.** Elektrochemischer Stromerzeuger, der ein Ventil nach einem der vorhergehenden Ansprüche umfasst.

**22.** Elektrochemischer Stromerzeuger nach Anspruch 21, **dadurch gekennzeichnet, dass** die zweite Wand Bestandteil eines Deckels ist, der den elektrochemischen Stromerzeuger schließt.

**23.** Elektrochemischer Stromerzeuger nach einem der Ansprüche 21 und 22, **dadurch gekennzeichnet, dass** die zweite Wand oder die dritte Wand eine Anschlussstelle zur Entnahme von Strom bildet.

**Claims**

**1.** A vent valve including an elastic seal (21) compressed by a first wall (5) against an orifice (6) in a second wall (2) and surrounded by a third wall (4), **characterized in that** the seal has a section in a plane parallel to the first wall (5) or to the second wall (2) having three vertices (22a, 22b, 22c) disposed in a triangle, the three vertices (22a, 22b, 22c) of said section of the seal being connected in pairs by respective circular arcs, each of the circular arcs being on the outside of an imaginary triangle defined by the three vertices.

2. The vent valve claimed in claim 1 wherein the radius of curvature of each of the circular arcs is less than or equal to twice the length of a side of the imaginary triangle formed by the three vertices.

3. The vent valve claimed in claim 1 or 2 wherein the radius of curvature of each of the circular arcs is greater than or equal to $R \geq L \times (3 + \sqrt{3}) / 6$ where R is the radius of curvature of the circular arc and L is the length of a side of the imaginary triangle formed by the three vertices.

4. The vent valve according to one of claims 1 to 3 wherein the radius of curvature of each of the circular arcs is equal to the length of one side of the imaginary triangle formed by the three vertices.

5. The vent valve according to one of the preceding claims wherein the third wall (4) has a circular section.

6. The vent valve claimed in claim 5 **characterized in that** the diameter of the circle circumscribed on the three vertices of the section of the seal, when measured free of all external forces, is greater than or equal to 0.8 times the inside diameter of the third wall.

7. The vent valve claimed in claim 6 wherein the diameter of the circle circumscribed on the three vertices of the section of the seal, when measured free of all external forces, is greater than or equal to 0.9 times the inside diameter of the third wall.

8. The vent valve claimed in claim 7, wherein the diameter of the circle circumscribed on the three vertices of the section of the seal, when measured free of all external forces, is equal to the inside diameter of the third wall.

9. The vent valve according to one of the preceding claims wherein the first wall is parallel to the second wall.

10. The vent valve according to one of the preceding claims wherein the respective faces of the seal coming into contact with the first wall and the second wall are parallel.

11. The seal according to one of the preceding claims, wherein the flanks of the seal defining the section are all perpendicular to a common plane.

12. The vent valve according to one of claims 9 to 11 wherein the flanks of the seal defining the section are all perpendicular to two faces of the seal respectively in contact with the first wall and the second wall.

13. The seal according to one of the preceding claims wherein the vertices of the section of the seal are disposed in an equilateral triangle.

14. The vent valve according to one of the preceding claims, wherein the orifice in the second wall is centered on the axis of the third wall.

15. The vent valve according to one of the preceding claims wherein at least one vent opening (7a, 7b) is formed in the third wall or in the first wall.

16. The vent valve claimed in claim 15 including two vent openings in the third wall or in the first wall and diametrally opposed relative to the axis of the third wall.

17. The vent valve according to one of the preceding claims wherein the distance between the first wall and the second wall is greater than or equal to the diameter of the circle circumscribed on the three vertices of the section of the seal, as measured free of all external forces.

18. The vent valve claimed in claim 17 wherein the distance between the first wall and the second wall is greater than or equal to twice the diameter of the circle circumscribed on the three vertices of the section of the seal, as measured free of all external forces.

19. The vent valve claimed in claim 18, wherein the distance between the first wall and the second wall is greater than or equal to three times the diameter of the circle circumscribed on the three vertices of the section of the seal, as measured free of all external forces.

20. The vent valve according to one of the preceding claims wherein the seal includes a plurality of stacked layers of materials.

21. A storage cell including a vent valve according to one of the preceding claims.

22. The storage cell claimed in claim 21 **characterized in that** the second wall is part of a cover plate closing the storage cell.

23. The storage cell claimed in one of claims 21 and 22 **characterized in that** the second wall or the third wall constitutes a terminal of the storage cell.

# FIG. 1

# FIG. 2A

# FIG. 2B

# FIG. 3

# FIG. 4A

## 21

23a   24a   23b
24b

# FIG. 4B

23c
22b   22a
24a
23a   23b
21   22c

# FIG. 5

7a
4
21
7b

# F I G. 6A

26a

25a
25b
26b

# F I G. 6B

26a

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3994749 A